(19) Europäisches Patentamt
European Patent Office
Office européen des brevets

(11) Numéro de publication: **0 066 571 B1**

(12) **FASCICULE DE BREVET EUROPEEN**

(45) Date de publication du fascicule du brevet: **03.07.85**

(51) Int. Cl.⁴: **C 01 B 33/26**, C 04 B 35/00, C 04 B 28/00

(21) Numéro de dépôt: **81902468.8**

(22) Date de dépôt: **02.09.81**

(86) Numéro de dépôt international: **PCT/FR 81/00112**

(87) Numéro de publication internationale: **WO 82/00816 (18.03.82 Gazette 82/8)**

(54) **COMPOSE POLYMERIQUE MINERAL SYNTHETIQUE DE LA FAMILLE DES SILICOALUMINATES ET PROCEDE DE PREPARATION; OBJETS MOULES CONTENANT CE COMPOSE POLYMERIQUE ET PROCEDE D'OBTENTION.**

(30) Priorité: **03.09.80 FR 8018971**

(43) Date de publication de la demande: **15.12.82 Bulletin 82/50**

(45) Mention de la délivrance du brevet: **03.07.85 Bulletin 85/27**

(84) Etats contractants désignés: **AT CH DE FR GB LI LU NL SE**

(56) Documents cités:
**Journal of the Chemical Society, Dalton, Transactions, no. 12, publ. 1972, (Londres, GB), R.M. BARRER et al. "Chemistry of soil minerals. Part. XI. Hydrothermal transformations of metakaolinite in potassium hydroxide", pages 1254-9**
**Chemical Abstracts, vol.33, no.8, publié le 20 avril 1939,(Columbus,Ohio,US), St.J.Thugutt "Artifical kaliophilite..", colonnes 28479-28486,Arch,minéral.soc.sci. Varsovie 13, 109-13(1937); Neues Jahrb. Mineral. Geol., Ref.I,1938,411**
**Chemical Abstracts, vol.72, no.26, publié le 29 juin 1970,(Columbus,Ohio,US),G.L. BERG et al. "Nature of the thermal effects of products of the reaction of kaolinite with some bases",voir page 237, l'abrégé 135896d**

(73) Titulaire: **Davidovits, Joseph, 16, rue Galilée, F-02100 Saint-Quentin (FR)**
Titulaire: **SOCIETE COORDINATION ET DEVELOPPEMENT DE L'INNOVATION CORDI SA, 20 rue de la Fère, F-02100 Saint Quentin (FR)**

(72) Inventeur: **DAVIDOVITS, Joseph, 16 rue Galilée, F-02100 Saint-Quentin (FR)**

(56) Documents cités: (suite)
**Chemical Abstracts, vol.86, no.4, publié le 24 janvier 1977,(Columbus,Ohio,US),R.S. ZHUKOVA et al. "Synthetic kaliophilite", voir page 147, l'abrégé 19049v**
**Chemical Abstracts, vol.75, no.10, publié le 6 septembre 1971,(Columbus,Ohio,US),H. Besson et al. "New method for the synthesis of a nepheline group silicate, kaliophilite", voir page 488, l'abrégé 70782d**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 066 571 B1

ACTORUM AG

**Description**

L'invention a pour objet l'utilisation d'une réaction de polycondensation minérale de mélanges réactionnels à base de silico-aluminates alcalins, pour fabriquer, à basse température en principe inférieure à 120°C, des objets minéraux moulés contenant un polymère minéral de la famille des silico-aluminates et différentes charges minérales.

La réaction de polycondensation minérale est voisine de celle qui est à l'origine de la synthèse de produits minéraux bien particuliers: les zéolites synthétiques ou tamis moléculaires. Ces produits ont une structure tridimensionnelle très caractéristique, qui est une succession d'assemblage de tétraèdres $TO_4$ (où T = Si, Al, Ga, P) formant des canaux et cavités de dimensions régulières. Ces dimensions sont équivalents à celles de la plupart des molécules organiques, ce qui explique l'utilisation de ces structures minérales pour filtrer les particules organiques de différentes dimensions. En plus, ces structures particulières sont utilisées pour leurs propriétés échangeuses d'ions. Elles ont une action catalytique certaine sur de nombreuses polymérisations organiques. Un grand nombre de brevets de synthèse de ces zéolites ou tamis moléculaires décrivent les processus de fabrication de ces minéraux particuliers. Une documentation générale est constituée par l'ouvrage de D.W. Breck: «Zeolite Molecular Sieves» (Intersience Publishers John Wiley & Sons, New York 1974). Il s'agit en général d'une synthèse hydrothermale à partir d'un gel de silico-aluminate en présence de bases fortes en concentrations élevées. La réaction s'effectue en vase clos, à pression et température constantes, en présence d'un très large excès d'eau. En général, les conditions choisies sont la pression atmosphérique et des températures comprises entre 25°C et 125°C, et les temps de réaction sont de plusieurs dizaines d'heures. La formule chimique brute de ces zéolites synthétiques et tamis moléculaires est:

$$M_{y/n}Al_ySi_xO_{2(x+y)},wH_2O$$

M étant un cation de valence n. De nombreux produits cristallins ont été obtenus par divers procédés utilisant cette synthèse hydrothermale. L'objectif de tous ces procédés est l'obtention de produits très poreux, généralement en poudre, cette poudre cristalline pouvant être ensuite agglomérée par un liant. Ces produits ont en général des médiocres caractéristiques mécaniques.

Un objet de cette invention est de décrire l'utilisation de cette synthèse hydrothermale, plus précisément de cette polycondensation minérale, afin d'obtenir des produits minéraux dotés de caractéristiques techniques et mécaniques très supérieures, permettant la fabrication d'objets minéraux relativement durs (5 à 7 dans l'échelle de Mohs), stables thermiquement, d'une définition de surface très fine, pouvant être utilisés en tant qu'objet, objet d'art, matériau de construction, moule industriel, outil, ou autres applications technologiques comme liant minéral céramique ou revêtement. A cet effet, il a été découvert que si on ne se plaçait pas dans des conditions réactionnels qui favorisent la cristallisation, et la formation des cristaux, on aboutissait à des produits nouveaux.

La description d'un polymère minéral nouveau, plus précisement d'un composé polymérique, et ses procédés de fabrication est l'objet principal de cette invention. L'utilisation de ce composé polymérique pour ses qualités permettant son utilisation en tant que liant minéral, est un autre objet de cette invention.

La terminologie utilisée pour ces polymères minéraux de structure tridimensionnelle, a été décrite dans les publications sientifiques suivantes: IUPAC International Symposium on Macromolecules, Stockholm 1976, Topic III, Applied Polymer Symposia; PACTEC IV, 1979, Society of Plastic Engineers, USA, Preprint page 151. Ces polymères minéraux appartiennent à la classe des polysialates de formule générale

$$M_n(-(SiO_2)_z-AlO_2-)_n,wH_2O$$

dans laquelle «z» peut être égal à 1, 2 ou 3, «M» est un cation monovalent, «n» est le degré de polymérisation. Dans le cadre de la présente invention, le polymère minéral correspond plus précisément à «z» = 1, soit la formule générale

```
      |    |
Mn(-Si-O-Al-O-)n,wH2O
      |    |
      O    O
      |    |
```

En général, lorsqu'il s'agit de caractériser une espèce chimique bien particulière, outre l'analyse chimique, il est préférable d'utiliser aussi l'examen des diagrammes de diffraction aux Rayons X. Le polymère (K)-PS décrit dans cette invention possède un diagramme de diffraction aux Rayons X comme indiqué dans le Tableau A. On a utilisé pour cela la méthode des poudres de Debye-Scherrer, émission K alpha du Cuivre.

Le diagramme est très voisin de celui d'un minéral naturel extrêmement rare, la Kaliophilite $KAlSiO_4$, répondant bien à la formule générale des Polysialates. Ce minéral n'est pas une zéolite, mais un feldspathoide anhydre, c'est à dire que la formule

```
    |    |
Kn(Si-O-Al-O)n,wH2O
    |    |
    O    O
    |    |
```

«w» est compris entre 0 et 1, et «n» est le degré de polycondensation. Cette distinction est importante. En effet, les polymères minéraux contenant de l'eau de constitution zéolitique, doivent être déshydratés et déshydroxylés, par une sèche ménagée allant jusque 400°C environ avant de pouvoir supporter sans dommage le choc thermique à plus haute température. Au contraire un minéral, du type de la Kaliophilite subira sans dommage le choc thermique, car sa structure ne sera pas modifiée. Ce test de la tenue au choc thermique, par exemple sous la flamme d'un chalumeau, est aussi un moyen rapide de constater la présence ou non d'une structure zéolitique ou feldspathoidique. Mais le plus surprenant dans le cas du Polysialate (K)-PS qui constitue l'élément principal du composé polymérique objet de cette invention, et dont la composition en terme d'oxyde est

$$K_2O:Al_2O_3:2SiO_2:H_2O$$

c'est que la synthèse du (K)-PS demande un rapport $SiO_2/Al_2O_3$ supérieur aux quantités stoechiométriques, c'est à dire supérieur à 2, puisqu'il est compris entre 3,3 et 4,5. Cette découverte surprenante fut faite au cours d'un développement ultérieur d'un procédé décrit par le brevet français n° 79.22041 déposé par la demanderesse, et relatif à la synthèse de polymères minéraux (Na,K)Poly(sialate-siloxo) ou (Na,K)-PSS de formule générale

```
               |    |    |
(Na,K)n(-Si-O-Al-O-Si-O-)n,wH2O
               |    |    |
               O    O    O
               |    |    |
```

Les rapports molaires des réactifs utilisés dans la synthèse du (Na,K)-PSS selon la demande de brevet français n° 79.22041 sont:

| | |
|---|---|
| $(Na_2O,K_2O)/SiO_2$ | 0,20 à 0,28 |
| $SiO_2/Al_2O_3$ | 3,5 à 4,5 |
| $H_2O/(Na_2O,K_2O)$ | 15 à 17,5 |
| $(Na_2O,K_2O)/Al_2O_3$ | 0,8 à 1,20 |

TABLEAU A (1Å = 0,1 nm)

| Zéolite Z | Zéolite G | Zéolite W | Kaliophilite | (K)-PS |
|---|---|---|---|---|
| $KAlSiO_4,3H_2O$ | $KAlSi_2O_6,5H_2O$ | $K_5Al_5Si_9O_28,25H_2O$ | $KAlSiO_4$ | $(K)_n(-Si(-O-)-O-Al(-O-)-O-)_n$ |
| d(A) I | d(A) I | d(A) I | d(A) I | d(A) I |
| — | 9,47 mF | 9,99 20 | 10 halo | 10-11,5 halo |
| — | — | 8,17 49 | — | — |
| 7,45 TTF | — | 7,09 54 | — | — |
| — | 6,90 m | — | — | — |
| — | 5,22 m | 5,34 28 | — | — |
| 4,78 tf | — | 5,01 56 | — | — |
| — | — | 4,45 21 | 4,49 35 | 4,49 m |
| — | 4,32 F | 4,28 35 | 4,28 40 | 4,27 f |
| — | 3,97 mF | — | — | — |
| — | 3,70 f | 3,64 20 | | — |
| 3,47 m | 3,46 F | — | 3,52 35 | 3,52 m |
| 3,29 m | — | 3,25 100 | 3,32 35 | 3,33 F |
| 3,09 TF | 3,11 mf | 3,17 75 | large bande | 3,23 halo |
| 2,97 F | 2,93 TTF | 2,95 71 | 3,10 100 | à |
| 2,82 TF | 2,80 f | 2,72 53 | large bande | 2,79 fort |
| — | 2,59 F | 2,54 26 | 2,61 45 | 2,56 f |
| 2,35 f | 2,29 F | 2,40 8 | 2,24 20 | 2,25 tf |
| 2,20 f | 2,19 mF | 2,18 10 | 2,13 37 | 2,17 tf |

Si on utilise exclusivement comme réactifs un polysilicate de potassium, de la potasse KOH, et l'oxyde alumino-silicate $(Si_2O_5,Al_2O_2)_n$, le produit polymérique obtenu ne correspond pas aux (Na,K)PSS obtenus selon la demande de brevet français n° 79.22041, en particulier le diagramme aux Rayons X, et la thermogravimétrie. Le produit obtenu est pratiquement amorphe aux Rayons X, alors que les (Na,K)-PSS ont un diagramme aux Rayons X voisin de celui des minéraux Analcime, Gismondine, Gmelinite, Phillipsite. La thermogravimétrie indique une perte de poids en eau de 5% jusqu'à 325°C puis le poids reste constant, alors que les (Na,K)-PSS ont une perte de poids comprise entre 21% et 29% entre 100°C et 500°C. Le caractère zéolitique du produit est absent, tandis que les propriétés macroscopiques montrent une certaine fragilité, bien que le produit soit dur: dureté 5 dans l'échelle de Mohs.

Une Kaliophilite de synthèse $KAlSiO_4,0,1H_2O$ a été préparée par H.Besson, S.Caillère et S.Hénin (Comptes Rendus Académie des Sciences de Paris, tome 272, série D, pages 2749-2752, 1971), à partir de gels silico-alumineux et de carbonate de potassium $K_2CO_3$; cette Kaliophilite de synthèse, anhydre, possède un diagramme aux Rayons X indiqué dans le Tableau A. Ce diagramme est pratiquement identique à celui du (K)-PS, sauf que dans le cas de la Kaliophilite, la large raie allant de 2.79 à 3.23 Angstroms est ici accompagnée d'une raie intense, en son milieu à 3.10 Angstroms.

Parmi les zéolites de synthèse pouvant se rapprocher du polymère (K)-PS, on peut citer la Zéolite Z (ou

Zéolite KF), la Zéolite G (ou Zéolite K-G), la Zéolite W (ou Zéolite K-M,K-H) et dont les diagrammes aux Rayons X sont reproduits également dans le Tableau A, d'apres l'ouvrage de D.W.Breck cité ci-dessus.

Le Tableau B reproduit les rapports molaires entre les différents oxydes réactifs utilisés dans les synthèses des produits cités dans le Tableau A.

TABLEAU B

| | Zéolite Z | Zéolite G | Zéolite W | Kaliophilite | (K)-PS |
|---|---|---|---|---|---|
| $K_2O/SiO_2$ | 0,425 | 0,50 | 0,6 | excès | 0,26 à 0,36 |
| $SiO_2/Al_2O_3$ | 4 | 5 | 6 | 2 et 4 | 4 à 4,2 |
| $H_2O/Al_2O_3$ | excès | excès | 75 | excès | 12,5 à 23 |
| $K_2O/Al_2O_3$ | 1,7 | 2,5 | 3 | excès | 1,12 à 1,6 |

Pour préparer le K-Polysialate ou (K)-PS, on utilise un mélange réactionnel aqueux de silico-aluminate de potassium, tel que la composition du mélange réactionnel exprimé par le rapport des oxydes, corresponde aux valeurs indiquées dans le Tableau C. La valeur expérimentale $H_2O$ est égale à l'eau présente en tant que solvant dans le mélange, ajoutée de l'eau de constitution chimique des composés.

TABLEAU C

| | |
|---|---|
| $K_2O/SiO_2$ | 0,25 à 0,48 |
| $SiO_2/Al_2O_3$ | 3,3 à 4,5 |
| $H_2O/Al_2O_3$ | 10 à 25 |
| $K_2O/Al_2O_3$ | 1,1 à 1,6 |

La méthode ordinaire de préparation du K-Polysialate, (K)-PS consiste à mélanger un oxyde alumino-silicate dans une solution aqueuse de polysilicate de potassium, avec de la potasse KOH. Cet oxyde alumino-silicate $(Si_2O_5,Al_2O_2)_n$ est préparé à partir d'un polyhydroxy-aluminosilicate $[Si_2O_5,Al_2(OH)_4]_n$ dans lequel de cation aluminium se trouve en position octaédrique et est hexacoordonné. Par déshydroxylation à une température comprise entre 550°C et 800°C, le polyhydroxy-aluminosilicate se transforme en un oxyde aluminosilicate extrèmement réactif $(Si_2O_5,Al_2O_2)_n$ dans lequel le cation aluminium est tétracoordonné. Les polyhydroxy-aluminosilicates pouvant servir de matière première sont les minéraux répondant à la classe des minéraux argileux à 7 Angstroms, et possédant au moins un cation aluminium dans la couche octaédrique sousjascente à la couche tétraédrique du cation silicium, comme par exemple les minéraux naturels: alushite, carnat, china clay, lithomarge, néokaolin, parakaolinite, pholénite, endellite glossecollite, halloysite, milanite, berthiérine, fraigonite, grovénite amésite, chamoisite.

Dans le document «Chemical Abstracts, volume 86, numéro 4, 24. janvier 1977, R.S. Zhukova et al, abbrégé 19046v, Khim. Teknol. (1976) (3), 64-4, décrive la fabrication de Kaliophilite par réaction hydrothermale entre le kaolin et le silicate de K. Cette synthèse est obtenue à très haute température, à 360°C pendant au moins 4 heures, alors que dans le cadre de l'invention, la synthèse du composé polymérique et du K-PS s'obttient à une température inférieure à 120°C, de préférence entre 60°C et 90°C, et pour des temps beaucoup plus courts.

Le composé polymérique minéral de la famille des silico-aluminates, obtenu par polycondensation d'un mélange réactionnel selon le Tableau C, a une composition chimique exprimée en terme d'oxyde de

$$yK_2O:Al_2O_3:xSiO_2:wH_2O$$

dans la forme hydratée de laquelle «w» est au plus égal à 4, «x» est une valeur comprise entre 3,3 et 4,5, «y» est une valeur comprise entre 1,1 et 1,6.

Le composé polymérique minéral est en fait une solution solide comprenant 35 à 90 parties en poids d'un polysilicate de potassium de formule $(y-1)K_2O:(x-2)SiO_2:(w-1)H_2O$ et de 10 à 65 parties en poids du polymère minéral (K)PS de formule

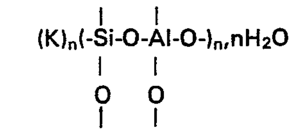

dont le diagramme de diffraction aux Rayons X est voisin de celui du minéral naturel Kaliophilite, selon le Tableau A.

La quantité en produits intervenant dans la réaction, à savoir le polysilicate de potassium, la potasse KOH, l'oxyde aluminosilicate, correspond aux valeurs données par le Tableau C. On constate que ces conditions réactionnelles sont différentes de celles habituellement utilisées dans la synthèse de Zéolites Z,G,W, comme le montre le Tableau B. En particulier, dans ces procédés l'eau est en grand excès et les quantités en $K_2O$ sont très supérieures à celles employées dans l'invention. Selon l'invention, on utilisera de préférence un rapport $SiO_2/Al_2O_3$ proche de 4 à 4,2 et un rapport $K_2O/Al_2O_3$ compris entre 1,3 et 1,52. Des rapports plus grands se traduisent par une quantité trop importante de la phase silicate de potassium dans la solution solide du composé polymérique, c'est à dire par une alcalinité libre et des migrations de silicate de potassium qui peuvent perturber les propriétés physiques et chimiques des matériaux ainsi réalisés. Des rapports plus petits, par exemple inférieurs à 3,7 et 1,1 respectivement, fournissent des matériaux qui sont entièrement fissurés et ne peuvent donc pas servir à la fabrication d'objet.

Le mélange réactionnel, correspondant au Tableau C, n'est pas un gel; il est fluide et se comporte comme une résine minéral ayant des propriétés rhéologiques intéressantes lorsque on le laisse maturer pendant environ au moins 1 heure à une température ambiante, par exemple 25°C. Après cette maturation,

cette résine minérale est utilisée soit telle quelle, soit avec des charges minérales et/ou organiques, soit en tant que liant ou ciment de produits minéraux et/ou organiques. La masse qui en résulte est alors introduite dans un moule, soit par simple coulée si le mélange est suffisamment fluide, soit par tassement, soit par pression ou vibration ou autre moyen mécanique ou physique, puis l'ensemble est porté à une température au plus égale à 120°C, de préférence entre 60°C et 95°C. Après polycondensation, l'objet minéral est sorti du moule ou de l'empreinte puis séché à une température inférieure à 100°C. Les temps de durcissement ou de polycondensation sont évidemment fonction de la température et de la technique de chauffage. A la température ambiante de 25°C, le temps de durcissement est de 15 heures; à 50°C de 4 heures; à 85°C de 1h30min; à 90°C de 0h30min. On peut utiliser également d'autres modes de chauffage, comme la haute fréquence, les microondes, l'effet joule, la résistance électrique noyée. Les mélanges réactionnels étant des polyélectrolytes, dans ces conditions les temps de polycondensation seront plus rapides.

L'ordre d'introduction des différents réactifs dans le mélange réactionnel est important, surtout si l'on veut donner à la résine minérale une durée de vie en pot (potlife) très longue, par exemple 2 à 4 heures dans un atelier. Les applications industrielles de l'invention s'en trouvent grandement facilitées. Il est pour cela nécessaire d'éviter le contact direct de la potasse concentrée KOH avec l'oxyde aluminosilicate $(Si_2O_5,Al_2O_2)_n$. Pour obtenir l'objet de l'invention, il est nécessaire de masquer soit l'oxyde aluminosilicate, soit KOH. Le masquage de KOH a lieu par la préparation d'une solution fortement alcaline du polysilicate de potassium. On ajoute ensuite dans cette solution l'oxyde aluminosilicate qui s'y trouve ainsi dissout. Une autre méthode de l'invention consiste au contraire à masquer l'oxyde aluminosilicate par une solution de polysilicate alcalin, puis à mélanger ce mélange avec la solution concentrée de KOH. Cette dernière méthode possède l'avantage de pouvoir réaliser l'objet de l'invention à partir de deux mélanges stables dans le temps, permettant le stockage et les facilités de manipulation. La résine minérale obtenue en laissant maturer le mélange réactionnel pendant environ au moins 1 heure à température ambiante (25°C), ou le mélange résine minérale (liant), sont placés dans un moule de préférence fermé. La réaction de polycondensation s'effectue dans des conditions hydrothermales, et il est nécessaire de conserver toute l'eau présente dans le milieu réactionnel. On évitera donc toute évaporation superficielle soit en utilisant un moule fermé, soit en le recouvrant avec tout moyen de protection évitant l'évaporation de l'eau, comme un film plastique ou une fine couche d'une substance hydrophobe. Après avoir durci dans le moule, on sépare de son moule le solide ainsi obtenu, et on sèche. L'objet moule ainsi obtenu est doté de propriétés physiques et mécaniques très intéressantes pour les applications technologiques de l'invention. En particulier, la définition ultra fine de la surface de l'objet obtenu permet la reproduction fidèle extrèmement précise de tous les détails, même les plus fins, de l'empreinte et du moule. Cette précision de reproduction est comparable en qualité à celle obtenue avec des résines organiques utilisées couramment dans la reproduction et le moulage, comme les résines époxy et polyuréthanes, mais dans le cas de l'invention, la dureté de surface de l'objet est égale à 5 à 7 dans l'échelle de Mohs, contre au maximum 2 à 3 pour les résines organiques.

Les exemples qui suivent illustrent les procédés de préparation de ce composé polymérique contenant en solution solide le (K)-PS, et permettent de décrire certaines de ses propriétés.

*Exemple 1*

On prépare 860 grammes d'un mélange contenant: $H_2O$: 17,33 moles; $K_2O$: 1,630 moles; $SiO_2$: 4,46 moles et $Al_2O_3$: 1,081 moles. $Al_2O_3$ provient de l'oxyde aluminosilicate obtenu par déshydroxylation d'un polyhydroxy-aluminosilicate naturel $[Si_2O_5,Al_2(OH)_4]_n$ et $SiO_2$ provient également de cet oxyde aluminosilicate et d'une solution de silicate de potassium. $K_2O$ provient du silicate de potassium et de KOH anhydre.

Le rapport molaire des oxydes réactionnels est donné par le Tableau D:

TABLEAU D

| | |
|---|---|
| $K_2O/SiO_2$ | 0,36 |
| $SiO_2/Al_2O_3$ | 4,12 |
| $H_2O/Al_2O_3$ | 16,03 |
| $K_2O/Al_2O_3$ | 1,51 |

Le mélange fluide est laissé maturer pendant au moins 1 heure à température ambiante (25°C), puis est coulé dans un moule. La couche supérieure de la masse est recouverte par un film de polyéthylène et l'ensemble est placé dans une étuve à 85°C pendant 1h30min; on démoule et après sèche à 85°C, la densité du produit est de 1,7 grammes par millilitre; la dureté est à 4,5 dans l'échelle de Mohs; il est blanc, très peu poreux; l'analyse physico-chimique donne une composition molaire de

$$1{,}5K_2O:Al_2O_3:4{,}1SiO_2:3H_2O$$

correspondant à un composé polymérique contenant en solution solide une phase d'un polysilicate de potassium de formule brute

$$0{,}5K_2O:2{,}1SiO_2:2H_2O$$

et un (K)-PS

| |
(K)n(-Si-O-Al-O)n,nH2O
| |
O O
| |

Le diagramme aux Rayons X effectué par la méthode des poudres Debye-Scherrer, raie K alpha du Cuivre, chambre de 57,3 mm de rayon, donne les raies du (K)-PS reproduites dans le Tableau A.

Le solide obtenu présente cependant des fissures très nettes. Ces fissurations disparaissent lorsque, au mélange réactionnel, après, ou pendant la maturation, ou même avant, on ajoute au moins une charge minérales. Les objets moulés ainsi obtenus ont alors des caractéristiques physiques et mécaniques excellentes, comme par exemple une résistance à la flexion d'environ 180 kg/cm², une dureté pouvant atteindre 7 dans l'échelle de Mohs, un coefficient de dilatation linéaire en fonction de la température voisin de 2 à $5 \cdot 10^{-6}$ m/m/°C.

*Exemple 2*

Selon la technique décrite dans l'Exemple 1, on prépare 960 grammes d'un mélange réactionnel contenant $H_2O$: 22,88 moles, les autres constituants étant inchangés.

Le rapport molaire des oxydes réactionnels est celui du Tableau D, sauf pour $H_2O/Al_2O_3$ égal à 21.

Le mélange très fluide est laissé maturer pendant environ 1 heure à température ambiante, puis on y ajoute 640 grammes de Cordiérite synthétique contenant également de la Mullite, de granulométrie inférieure à 120 microns. Le mélange visqueus obtenu est coulé dans un moule et durci à 85°C pendant 1h30min comme dans l'Exemple 1. Après sèche à 85°C, la densité du produit est de 2,3 grammes par millilitre, la dureté est égale à 5 Mohs; ses dimensions indiquent que la polycondensation s'est effectuée pratiquement sans retrait.

L'examen aus Rayons X est fait à l'aide d'une technique différente, l'enregistrement de la courbe téta/2 tétas, émission de la raie du Cobalt à 1.79 Angstroms. Outres les raies très intenses de la Cordiérite et celles assez fortes de la Mullite, on distingue des raies faiblement intenses à 4.49/4.28/3.53/2.59/2.28+.16 Angstroms ainsi qu'une zone entre 10.00 et 11.8 Angstroms. Ce diagramme est celui du (K)PS indiqué dans le Tableau A, seule la zone entre 3.38 et 2.80 Angstrom étant recouverte par les intenses raies de la Cordiérite.

*Exemple 3*

Selon la techncique décrite dans l'Exemple 1, on prépare 792 grammes d'un mélange réactionnel contenant $H_2O$: 13,5 moles, les autres constituants étant inchangés.

Le rapport molaire des oxydes réactionnels est celui du Tableau D, sauf pour $H_2O/Al_2O_3$ égal à 12,5.

Le mélange fluide est laissé maturer pendant environ 1 heure à température ambiante, puis on ajoute 540 grammes de Cordiérite synthétique contenant également de la Mullite, de granulométrie inférieure à 120 microns. Puis in procède comme dans l'Exemple 2.

L'examen aux Rayons X fait comme dans l'Exemple 2, montre les mêmes raies du (K)-PS avec en plus des raies faiblement intenses à 3.24/2.95/2.88/2.82 Angstroms, c'est à dire dans la bande amorphe située dans le diagramme du (K)-PS du Tableau A, entre 2.79 et 3.23 Angstroms.

Le rapport $H_2O/Al_2O_3$ peut varier entre 10 et 25. On préfèrera cependant se rapprocher des valeurs comprises entre 14 et 20. Des valeurs plus grandes augmentent la porosité du produit obtenu, alors que des valeurs plus basses semblent perturber la phase silicate de potassium de la solution solide du composé polymérique, accompagnées de migration et d'une alcalinité libre. Aussi, dans la pratique, préfère-t-on utiliser des mélanges réactionnels dont les rapports molaires des oxydes réactifs correspondent au Tableau E:

TABLEAU E

| | |
|---|---|
| $K_2O/SiO_2$ | 0,30 à 0,38 |
| $SiO_2/Al_2O_3$ | 4,00 à 4,20 |
| $H_2O/Al_2O_3$ | 14 à 20 |
| $K_2O/Al_2O_3$ | 1,30 à 1,52 |

*Exemple 4*

On prépare 860 grammes du mélange réactionnel de l'Exemple 1 et on y ajoute 220 grammes de Muscovite de granulométrie inférieure à 120 microns et 90 grammes de Fluorure de Calcium $F_2Ca$ en poudre fine.

La résine visqueuse ainsi obtenue sert à agglomérer 1kg150 grammes de sable de Zircon. Ce mélange est coulé par vibration dans un moule qui est ensuite placé à 85°C pendant 1h30min. Après sèche, le produit obtenu a une densité de 3,0 grammes par millilitre. Son aspect est brillant, sa dureté est de 6 dans l'échelle de Mohs.

L'analyse du diagramme des Rayons X est très délicate, car outre les raies intenses du Zircon et du Fluorure de Calcium, celles très nombreuses de la Muscovite recouvrent pratiquement toutes les raies caractéristiques du (K)-PS.

*Exemple 5*

On prépare un mélange réactionnel selon l'Exemple 1. Après maturation on applique au pinceau, la résine ainsi formée, en très fine couche sur une empreinte constituant le négatif d'une sculpture. Parallèlement, on introduit dans un mélangeur 5 kilogrammes de silex de granulométrie comprise entre 0,5 et 5 mm, et on y ajoute 0,5 kilogrammes soit 10% en poids du silex, de cette même résine minérale. Le mélange est vibré dans l'empreinte déjà enduite et on recouvre avec un film de polyéthylène et on laisse durcir à la température ambiante (25°C). On démoule, le lendemain, une sculpture possédant une peau extrèmement fine, dure et brillante.

Les mélanges réactionnels silicoaluminates de potassium décrits dans cette invention permettent de fabriquer des objets moulés résultant de l'agglomération de 5 à 95 parties en poids de produits et charges minérales et/ou organiques, avec 5 à 95 parties en poids d'un liant constitué d'un composé polymérique minéral dont la composition exprimée en terme d'oxyde est

$$yK_2O:Al_2O_3:xSiO_2:wH_2O$$

dans la forme hydratée de laquelle «w» est au plus égal à 4, «x» est une valeur comprise entre 3,3 et 4,5, «y» est une valeur comprise entre 1,1 et 1,6.

Le composé polymérique minéral est une solution

solide comprenant 35 à 90 parties en poids d'un polysilicate de potassium de formule

$$(y1)K_2O:(x-2)SiO_2:(w-1)H_2O$$

pour 10 à 65 parties en poids de polysilicate de potassium de formule

| |
$(K)_n(-Si-O-Al-O-)_n,nH_2O$
| |
O O
| |

et dont le diagramme de diffraction aux Rayons X est voisin du minéral naturel Kaliophilite selon le Tableau A.

Selon les charges utilisées, comme par exemple la Muscovite, les aluminosilicates naturels ou synthétiques, le Zircon, le Carbure de Silicium les chamottes, ou autres produits céramiques ou réfractaires, les objets moulés possèdent une très grande résistance au choc thermique. Bien que l'on puisse appliquer directement la flamme d'un chalumeau sur les objets destinés à subir des températures élevées, comprises entre 300°C et 1200°C, il est préférable de faire subir un traitement thermique à une température au moins égale à 325°C, afin d'éliminer l'eau de constitution. Le composé polymérique minéral est déshydraté et déshydroxylé et est transformé en un produit de qualité équivalente ou supérieure à celle des matériaux céramiques, et possède une excellente stabilité thermique. Sa composition exprimée sous forme des oxydes est alors:

$$yK_2O:Al_2O_3:xSiO_2$$

dans laquelle «x» est une valeur comprise entre 3,3 et 4,5, «y» est une valeur comprise entre 1,1 et 1,6. Il est constitué d'une solution solide comprenant une phase de polysilicate de potassium de composition

$$(y-1)K_2O:(x-2)SiO_2$$

et une phase de Polysialate (K)PS de formule

| |
$(K)_n(-Si-O-Al-O-)_n$
| |
O O
| |

Les mélanges réactionnels silicoaluminates de potassium décrits dans cette invention constituent une résine minérale pouvant être utilisée avec au moins une charge minérale et/ou organique, ou en tant que liant ou ciment. La polycondensation ou le durcissement se fait soit à la température ambiante, soit jusqu'à une température inférieure à 120°C. Toutes charges, ainsi que des produits auxiliaires compatibles peuvent être ajoutés, nous citerons sans limitation d'aucune sorte: les colorants et pigments, les agents de débullage, les fibres de renforcement, les agents hydrofugeants.

Les objets moulés réalisés à l'aide de l'invention ont des utilisations multiples selon la caractéristique physique, mécanique ou chimique mise en jeu: dans l'industrie, le bâtiment, la décoration, sous forme d'objet, de moule, d'outil, de bloc, de panneau, de revêtement. Ils peuvent subir multiples traitements physiso-chimiques, physiques ou mécaniques postérieurs, ainsi que des opérations d'apprêt ou de finition, de bouchage de la porosité. Si nécessaire, ils subiront un traitement thermique à une température au moins égale à 325°C environ, les transformant en produits ayant des qualités céramiques, en particulier une excellente stabilité thermique et dimensionnelle.

**Revendications**

1. Composé polymérique minéral de la famille des silicoaluminates, dont la composition exprimée en terme d'oxyde est:

$$yK_2O:Al_2O_3:xSiO_2:wH_2O$$

dans la forme hydratée de laquelle «w» est une valeur au plus égale à 4, «x» est une valeur comprise entre 3,3 et 4,5, «y» est une valeur comprise entre 1,1 et 1,6, caractérisé en ce que ce composé polymérique minéral est constitué d'une solution solide comprenant une phase de polysilicate de potassium de composition

$$(y-1)K_2O:(x-2)SiO_2:(w-1)H_2O$$

et une phase de polymère Polysialate de potassium de formule

| |
$(K)_n(-Si-O-Al-O-)_n,nH_2O$
| |
O O
| |

dans lequel «n» est le degré de polycondensation, le dit polymère Polysialate du potassium ayant un diagramme aux Rayons X (1Å = 0,1 nm)

| d(Å) | I |
|---|---|
| 10-11.5 | halo |
| 4.49 | m |
| 4.27 | f |
| 3.52 | m |
| 3.33 | F |
| 3.23 à 2.79 | fort halo |
| 2.56 | f |
| 2.25 | tf |
| 2.17 | tf |

2. Composé polymérique selon la revendication 1, caractérisé en ce que la solution solide comprend 35 à 90 parties en poids du polysilicate de potassium pour 10 à 65 parties en poids de Polysialate de potassium de formule

| |
$(K)_n(-Si-O-Al-O-)_n,nH_2O$
| |
O O
| |

dans laquelle «n» est le degré de polycondensation.

3. Procédé de préparation d'un composé polymérique selon la revendication 2, caractérisé en ce qu'il consiste à préparer un mélange réactionnel à base de silicate de potassium, de potasse KOH et d'oxyde aluminosilicate $(Si_2O_5,Al_2O_2)_n$ dont le cation Al est en position tétracoordonnée et dans lequel «n» est le degré de polymérisation, tel que les rapport molaires des produits réactionnels exprimés en terme d'oxyde soient compris ou égaux aux valeurs suivantes:

| | |
|---|---|
| $K_2O/SiO_2$ | 0,23 à 0,48 |
| $SiO_2/Al_2O_3$ | 3,3 à 4,5 |
| $H_2O/Al_2O_3$ | 10 à 25 |
| $K_2O/Al_2O_3$ | 1,1 à 1,60 |

puis à faire durcir le dit mélange réactionnel à une température inférieure à 120°C.

4. Procédé de préparation d'un composé polymérique selon la revendication 3, caractérisé en ce que avant de faire durcir ce dit mélange réactionnel, on ajoute au dit mélange réactionnel 5 à 95 parties en poids d'au moins une charge minérale, pour former le dit composé polymérique.

5. Procédé de préparation d'un objet moulé consistant à préparer un mélange aqueux de silico-aluminate de potassium, à base de silicate de potassium, de potasse KOH et d'oxyde aluminosilicate $(Si_2O_5,-Al_2O_2)_n$ dont le cation Al est en position tétracoordonnée, tel que les rapports molaires des produits réactionnels exprimés en terme d'oxyde soient compris ou égaux aux valeurs suivantes:

| | |
|---|---|
| $K_2O/SiO_2$ | 0,30 à 0,38 |
| $SiO_2/Al_2O_3$ | 4,0 à 4,2 |
| $H_2O/Al_2O_3$ | 14 à 20 |
| $K_2O/Al_2O_3$ | 1,3 à 1,52 |

puis à ajouter dans le dit mélange silico-aluminate 5 à 95 parties en poids d'au moins une charge minérale et/ou organique, puis à mettre le dit mélange silico-aluminate/charge dans un moule, puis à faire durcir le mélange silico-aluminate/charge dans le dit moule pour obtenir un objet moulé solide résultant de la formation d'un composé polymérique tel que définit dans les revendications 1 et 2.

6. Procédé de préparation selon la revendication 5, caractérisé en ce que le dit composé polymérique minéral a une composition exprimée en terme des oxydes:

$$yK_2O:Al_2O_3:xSiO_2$$

dans laquelle «x» est une valeur comprise entre 4,0 et 4,2, «y» est une valeur comprise entre 1,3 et 1,52, le dit composé polymérique est constitué d'une solution solide comprenant une phase de polysilicate de potassium de composition

$$(y-1)K_2O:(x-2)SiO_2$$

et une phase de Polysialate de potassium de formule

```
   I    I
(K)n(-Si-O-Al-O-)n
   I    I
   O    O
   I    I
```

dans laquelle «n» est le degré de polycondensation.

**Patentansprüche**

1. Anorganisch polymerisches Compound der Silikoaluminatfamilie mit folgender Summenformel in Oxiden ausgedrückt:

$$yK_2O:Al_2O_3:xSiO_2:wH_2O$$

wobei in hydratisiertem Zustand «w» einen Wert von höchstens 4 hat, «x» einen Wert zwischen 3,3 und 4,5 besitzt, «y» einen Wert zwischen 1,1 und 1,6 hat, dadurch gekennzeichnet, dass dieses anorganische polymerische Compound aus einer mehrphasischen festen Lösung besteht: eine Phase enthaltend: Kaliumpolysilikat mit folgender Zusammensetzung:

$$(y-1)K_2O:(x-2)SiO_2:(w-1)H_2O$$

eine weitere Phase enthaltend: polymerisches Kaliumpolysialat mit der Formel:

```
   I    I
(K)n(-Si-O-Al-O-)n,nH2O
   I    I
   O    O
   I    I
```

wobei «n» der Polymerisationsgrad ist, besagtes polymerisches Polysialat besitzt folgendes Röntgendiagramm:

| d(A) | I |
|---|---|
| 10-11.5 | halo |
| 4.49 | mittel |
| 4.27 | schwach |
| 3.52 | mittel |
| 3.33 | stark |
| 3.23 bis 2.79 | halo |
| 2.56 | schwach |
| 2.25 | sehr schwach |
| 2.17 | sehr schwach |

2. Polymerisches Compound nach Anspruch 1, dadurch gekennzeichnet, dass die mehrphasische feste Lösung aus 35 bis 90 Gew.-% an Kaliumpolysilikat und 10 bis 65 Gew.-% an Kaliumpolysialat mit der Formel:

```
   I    I
(K)n(-Si-O-Al-O-)n,nH2O
   I    I
   O    O
   I    I
```

besteht, wobei «n» der Polymerisationsgrad ist.

3. Verfahren zur Herstellung eines polymerischen Compounds nach Anspruch 2, dadurch gekennzeichnet, dass ein Reaktionsgemisch hergestellt wird aus Kaliumsilikat, Kaliumhydroxid und aluminosilikatischem Oxid: $(Si_2O_5,Al_2O_2)_n$, wobei das Kation Al eine Koordinationszahl von IV besitzt und wobei «n» der Polymerisationsgrad ist, so dass das Oxidmolverhältnis des Reaktionsgemisches zwischen folgenden Werten liegt oder gleich folgenden Werten ist:

| | |
|---|---|
| $K_2O/SiO_2$ | 0,30 bis 0,48 |
| $SiO_2/Al_2O_3$ | 3,3 bis 4,5 |
| $H_2O/Al_2O_3$ | 10 bis 25 |
| $K_2O/Al_2O_3$ | 1,1 bis 1,60 |

dass man dann besagtes Reaktionsgemisch bei einer Temperatur unter 120°C aushärten lässt.

4. Verfahren zur Herstellung eines polymerischen Compounds nach Anspruch 3, dadurch gekennzeichnet, dass vor der Aushärtung besagten Reaktionsgemisches, zu diesem besagten Reaktionsgemisch 5 bis 95 Gew.-% mindestens eines Füllstoffes zugegeben wird, um besagtes polymerisches Compound zu bilden.

5. Verfahren zur Herstellung eines geformten Objektes, bei dem eine wässrige Kaliumsilikoaluminat-Mischung hergestellt wird, aus Kaliumsilikat, Kaliumhydroxid und aluminosilikatischem Oxid $(Si_2O_5,Al_2O_2)_n$, wobei das Kation Al eine Koordinationszahl von IV besitzt, so dass das Oxid-Molverhältnis des Reaktionsgemisches zwischen folgenden Werten liegt oder gleich folgenden Werten ist:

| | |
|---|---|
| $K_2O/SiO_2$ | 0,30 bis 0,38 |
| $SiO_2/Al_2O_3$ | 4,0 bis 4,2 |
| $H_2O/Al_2O_3$ | 14 bis 20 |
| $K_2O/Al_2O_3$ | 1,3 bis 1,52 |

dann zu besagter Silikoaluminatmischung 5 bis 95 Gew.-% mindestens eines mineralischen und/oder organischen Füllstoffes zugegeben wird, und besagte Mischung von Silikoaluminat/Füllstoff in eine Form gebracht wird, und die Silikoaluminat/Füllstoff-Mischung in besagter Form ausgehärtet wird, um ein festes geformtes Objekt zu erhalten, Ergebnis eines polymerischen Compounds gemäss Anspruch 1 oder 2.

6. Verfahren zur Herstellung nach Anspruch 5, dadurch gekennzeichnet, dass besagtes anorganisch polymerisches Compound folgende Summenformel, in Oxiden ausgedrückt, hat:

$$yK_2O:Al_2O_3:xSiO_2$$

wobei «x» einen Wert zwischen 4,0 und 4,2 besitzt, «y» einen Wert zwischen 1,3 und 1,52 hat, besagtes polymerisches Compound besteht aus einer mehrphasischen festen Lösung: eine Phase enthaltend: Kaliumpolysilikat mit folgender Zusammensetzung:

$$(y-1)K_2O:(x-1)SiO_2$$

eine weitere Phase enthaltend: Kaliumpolysialat mit der Formel:

```
      |    |
(K)n(-Si-O-Al-O-)nO
      |    |
      O    O
      |    |
```

wobei «n» der Polykondensationsgrad ist.

**Claims**

1. A mineral polymer compound of the silicoaluminates family having a composition, expressed in terms of oxides, as follows:

$$yK_2O:Al_2O_3:xSiO_2:wH_2O$$

where, in the fully hydrated form, «w» is a value at the most equal to 4, «x» is a value in the range of 3.3 to 4.5, «y» is a value in the range of 1.1 to 1.6, said mineral polymer compound comprises a solid solution comprising one phase of a potassium polysilicate having the following formula:

$$(y-1)K_2O:(x-2)SiO_2:(w-1)H_2O$$

and one phase of a potassium polysialate polymer having the following formula:

```
      |    |
(K)n(-Si-O-Al-O-)n,nH2O
      |    |
      O    O
      |    |
```

where «n» is the degree of polymerisation, said potassium polysialate polymer having an X-ray diffraction pattern as follows (1A = 0.1 nm):

| d(A) | I |
|---|---|
| 10-11.5 | halo |
| 4.49 | m |
| 4.27 | w |
| 3.52 | m |
| 3.33 | S |
| 3.23 to 2.79 | halo |
| 2.56 | w |
| 2.25 | vw. |
| 2.17 | vw. |

2. The mineral polymer compound of claim 1 where said solid solution comprises 35 to 90 parts by weight of said potassium polysilicate and 10 to 65 parts by weight of said potassium polysialate polymer having the following formula:

```
      |    |
(K)n(-Si-O-Al-O-)n,nH2O
      |    |
      O    O
      |    |
```

where «n» is the degree of polymerisation.

3. A method for preparing the polymer compound of claim 2 which comprises preparing a reactant mixture comprising potassium silicate, potassium hydroxyde and alumino-silicate oxide $(Si_2O_5,Al_2O_2)_n$ where the aluminum cation is in fourfold coordinated state and «n» the degree of polymerisation, and where the molar ratios of the reactants, expressed in terms of oxides have values equal or within the following ranges:

| | |
|---|---|
| $K_2O/SiO_2$ | 0.23 to 0.48 |
| $SiO_2/Al_2O_3$ | 3.3 to 4.5 |
| $H_2O/Al_2O_3$ | 10 to 25 |
| $K_2O/Al_2O_3$ | 1.1 to 1.60 |

then hardening said reactant mixture at a temperature of up to 120°C.

4. A method for preparing the polymer compound of claim 3 wherein before hardening, said reactant mixture comprises 5 to 95 parts by weight of at least one filler, and producing said polymer compound.

5. A method for preparing a molded object which comprises preparing a potassium silico-aluminate/water mixture comprising potassium silicate, potassium hydroxide and alumino-silicate oxide $(Si_2O_5,Al_2O_2)_n$ where the aluminum cation is in fourfold coordinated state, and where the molar ratios of the reactants, expressed in terms of oxides have values equal or within the following ranges:

| | |
|---|---|
| $K_2O/SiO_2$ | 0.30 to 0.38 |
| $SiO_2/Al_2O_3$ | 4.0 to 4.2 |
| $H_2O/Al_2O_3$ | 14 to 20 |
| $K_2O/Al_2O_3$ | 1.3 to 1.52 |

combining said silico-aluminate/water mixture with 5 to 95 parts by weight of at least one mineral and/or organic filler; placing said silico-aluminate/filler mixture in a mold; hardening said silico-aluminate/filler mixture in said mold to form a solid, molded article that includes a polymer compound corresponding to the claims 1 or 2.

6. The method according to claim 5, where said mineral polymer compound has a composition, expressed in terms of oxides as follows:

$$yK_2O:Al_2O_3:xSiO_2$$

where «x» is a value in the range of 4.0 to 4.2 and «y» is a value in the range of 1.3 to 1.52, said polymer compound including a solid solution comprising a potassium polysilicate phase having the formula:

$$(y-1)K_2O:(x-2)SiO_2$$

and a potassium polysialate phase having the formula:

```
        |    |
(K)n(-Si-O-Al-O-)n,O
        |    |
        O    O
        |    |
```

where «n» is the degree of polycondensation.